(19) Europäisches Patentamt
European Patent Office
Office européen des brevets

(11) EP 3 104 270 A1

## EUROPEAN PATENT APPLICATION

(12)

(43) Date of publication:
14.12.2016 Bulletin 2016/50

(51) Int Cl.:
G06F 3/16 (2006.01)    G06F 3/0346 (2013.01)

(21) Application number: 16160166.1

(22) Date of filing: 14.03.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 09.06.2015 KR 20150081476

(71) Applicant: Samsung Electronics Co., Ltd.
Gyeonggi-do 16677 (KR)

(72) Inventors:
• YOON, Seung-il
Gyeonggi-do, (KR)
• YUN, Hyun-kyu
Seoul, (KR)

(74) Representative: Appleyard Lees IP LLP
15 Clare Road
Halifax HX1 2HY (GB)

(54) **DISPLAY APPARATUS, POINTING APPARATUS, POINTING SYSTEM AND CONTROL METHODS THEREOF**

(57)    A display apparatus is provided. The display apparatus includes at least one speaker configured to output a sound signal; a display configured to display a pointing object; communication circuitry configured to communicate with a pointing apparatus for controlling a movement state of the pointing object, the pointing apparatus comprising a microphone to sense the sound signal; and a processor configured to display the pointing object at a reference position determined based on an oriented direction of the pointing apparatus determined based on information of time at which the pointing apparatus senses the sound signal, after a trigger signal for setting the reference position of the pointing object on a screen of the display is received from the pointing apparatus.

# FIG. 2

100

**Description**

CROSS-REFERENCE TO RELATED APPLICATION

This application is based on and claims priority under 35 U.S.C. §119 to Korean Patent Application No. 10-2015-0081476, filed on June 9, 2015, in the Korean Intellectual Property Office, the disclosure of which is incorporated by reference herein in its entirety.

BACKGROUND

Field

Apparatuses and methods disclosed herein relate generally to a display apparatus, a pointing apparatus, a pointing system, and control methods thereof, and for example, to a display apparatus, a pointing apparatus, a pointing system, and control methods thereof capable of pointing the display apparatus to control the display apparatus.

Description of Related Art

In accordance with the recent development of communications and image technologies, a display apparatus such as a monitor of a computer or a television provides a function causing a user to select various contents, beyond a function of simply providing images and voice to the user. For example, a digital TV, and the like provide various functions such as a function of receiving an electronic program guide, a bidirectional communication function, an Internet access function, and the like, in addition to a broadcast receiving function of an analog or digital broadcasting.

Meanwhile, as the display apparatus may perform the above-mentioned many functions, items that the user needs to control are also increased and become complicated. As a result, a problem has occurred that complex and various graphic user interfaces (GUIs), media, and functions may not be efficiently controlled by an existing remote controller of a button type.

To solve the above-mentioned problem, a general pointing input apparatus, for example, a pointing input apparatus such as a mouse is not used while being fixed onto a desk and has evolved into a remote controller capable of pointing the display apparatus in a three-dimensional space without a fixed place to control the display apparatus.

Examples of a scheme pointing the display apparatus in the three-dimensional space to control the display apparatus include an absolute pointing scheme and a relative pointing scheme. The relative pointing scheme uses an algorithm capable of changing a relationship between a position of the pointing apparatus and a position of a cursor, such that a gain between a movement of the pointing apparatus and a movement of the cursor may be changed and a fixed point becomes an initial start point of the cursor regardless of an oriented direction.

On the contrary, the absolute pointing scheme matches the position of the pointing apparatus and the position of the cursor by utilizing a highly learned direct mapping between the pointing apparatus and a position on a screen, wherein different points become the initial start point of the cursor depending on the oriented direction.

Since the absolute pointing scheme has an intuitive advantage as compared to the relative pointing scheme, the absolute pointing scheme is widely used. However, since an initial oriented angle between the display apparatus and the pointing apparatus needs to be sensed to implement the absolute pointing scheme, a geomagnetic field sensor is additionally required. However, in the case in which the absolute pointing scheme is implemented using the geomagnetic field sensor, there is a disadvantage that a setting for a premises geomagnetic field coordinate is separately required and the absolute pointing scheme is vulnerable to an environmental change. Thus, there is a problem that a periodical correction work is required.

As a result, a method for more conveniently sensing the oriented angle between the display apparatus and the pointing apparatus while not using the geomagnetic field sensor to set the initial start point of the cursor is required.

SUMMARY

Example embodiments of the present disclosure address the above disadvantages and other disadvantages not described above.

The present disclosure provides a display apparatus, a pointing apparatus, a pointing system, and control methods thereof capable of more conveniently setting an initial start point of a cursor in an absolute pointing scheme.

According to an example of the present disclosure, a display apparatus includes at least one speaker configured to output a sound signal; a display configured to display a pointing object; a communicator including communication circuitry configured to communicate with a pointing apparatus for controlling a movement state of the pointing object, the pointing apparatus comprising a microphone to sense the sound signal; and a processor configured to control the display apparatus so that the pointing object is displayed at a reference position determined based on an oriented direction of the pointing apparatus determined based on information of a time at which the pointing apparatus senses the sound signal, when a trigger signal for setting the reference position of the pointing object on a screen of the display is received from the pointing apparatus.

The display apparatus may include a first speaker configured to output a first sound signal and a second speaker configured to be spaced apart from the first speaker by a preset distance and to output a second sound signal different from the first sound signal, and the processor may be configured to receive information of a time at which the first sound signal and a time at which the second sound signal are each sensed by the microphone of the pointing apparatus, and to determine the oriented direction of the pointing apparatus based on a difference between the sensed times of the first sound signal and the second sound signal determined based on the received time information.

The processor may be configured to determine a horizontal position of the pointing apparatus based on the difference of the sensed times, to determine a horizontal oriented direction corresponding to the determined horizontal position of the pointing apparatus, and to determine a vertical oriented direction of the pointing apparatus based on motion information of the pointing apparatus sensed by a sensor included in the pointing apparatus.

The time information may be a record file in which the first sound signal and the second sound signal are each recorded, or information of time at which the first sound signal and the second sound signal are each sensed.

The pointing apparatus may include a first microphone and a second microphone which are spaced apart from each other by a preset distance, and the processor may be configured to receive information of a time at which the sound signal is sensed by the first microphone and at time at which the sound signal is sensed by the second microphone, respectively, from the pointing apparatus, and to determine the oriented direction of the pointing apparatus based on a difference of the sensed times of the first microphone and the second microphone determined based on the information of time.

The processor may be configured to determine a horizontal angle of the pointing apparatus based on the difference of the sensed times, to determine a horizontal oriented direction corresponding to the determined horizontal angle of the pointing apparatus, and to determine a vertical oriented direction of the pointing apparatus based on motion information of the pointing apparatus sensed by a sensor included in the pointing apparatus.

The display apparatus may include a first speaker configured to output a first sound signal and a second speaker configured to be spaced apart from the first speaker by a preset distance and to output a second sound signal different from the first sound signal, the pointing apparatus may include a first microphone and a second microphone which are spaced apart from each other by a preset distance, and the processor may be configured to receive first information of time at which the first sound signal and the second sound signal are each sensed by any one of the first microphone and the second microphone from the pointing apparatus, to receive second information of time at which any one of the first sound signal and the second sound signal is sensed by the first microphone and the second microphone, respectively, and to determine the oriented direction of the pointing apparatus based on a difference of the sensed times determined based on the first information of time and the second information of time.

The processor may be configured to determine a horizontal position and a horizontal angle of the pointing apparatus based on the difference of the sensed times, to determine a horizontal oriented direction corresponding to the determined horizontal position and horizontal angle of the pointing apparatus, and to determine a vertical oriented direction of the pointing apparatus based on motion information of the pointing apparatus sensed by a sensor included in the pointing apparatus.

When a signal corresponding to a magnitude and a direction of a motion of the pointing apparatus is received from the pointing apparatus after the pointing object is displayed at the reference position, the processor may be configured to move the pointing object to a position corresponding to the magnitude and the direction of the motion.

According to another example of the present disclosure, a pointing apparatus includes a communicator comprising communication circuitry, the communicator configured to communicate with a display apparatus displaying a pointing object on a screen, the display apparatus comprising at least one speaker to output a sound signal; a microphone configured to sense the sound signal; and a processor configured to control the pointing apparatus so that an oriented direction is determined based on information of time at which the sound signal is sensed, to determine a reference position of the pointing object based on the oriented direction, and a to provide and transmit a control signal allowing the pointing object to be displayed at the reference position.

The display apparatus may include a first speaker configured to output a first sound signal and a second speaker configured to be spaced apart from the first speaker by a preset distance and to output a second sound signal different from the first sound signal, and the processor may be configured to determine a difference of the sensed times of the first sound signal and the second sound signal based on information of time at which the first sound signal and the second sound signal are each sensed by the microphone, and to determine an oriented direction based on the difference of the sensed times.

The pointing apparatus may further include at least one of an acceleration sensor and a gyro sensor, and the processor may be configured to determine a horizontal position based on the difference of the sensed times, to determine a horizontal oriented direction corresponding to the determined horizontal position, and to determine a vertical oriented direction based on motion information sensed by at least one of the acceleration sensor and the gyro sensor.

According to another example of the present disclosure, a control method of a display apparatus includes: receiving a trigger signal for setting a reference position on a screen from a pointing apparatus, the pointing apparatus including a microphone for sensing a sound signal; outputting the sound signal through at least one speaker; receiving information of time at which the sound signal is sensed from the pointing apparatus; determining an oriented direction of the pointing apparatus based on the information of time; determining the reference position based on the oriented direction of the pointing apparatus; and displaying a pointing object at the reference position.

In the operation of outputting the sound signal, a first sound signal may be output through a first speaker and a second sound signal different from the first sound signal may be output through a second speaker spaced apart from the first speaker by a preset distance, in the operation of receiving the information of time, information of time at which the first sound signal and the second sound signal are each sensed by the microphone may be received from the pointing apparatus, and in the operation of determining the oriented direction, the oriented direction of the pointing apparatus may be determined based on a difference of the sensed times of the first sound signal and the second sound signal determined based on the information of time.

The operation of determining the oriented direction may include determining a horizontal oriented direction corresponding to a horizontal position of the pointing apparatus determined based on the difference of the sensed times; and determining a vertical oriented direction of the pointing apparatus based on motion information of the pointing apparatus sensed by a sensor included in the pointing apparatus.

The information of time may include a record file in which the first sound signal and the second sound signal are each recorded, or information of time at which the first sound signal and the second sound signal are each sensed.

The pointing apparatus may include a first microphone and a second microphone which are spaced apart from each other by a preset distance, in the operation of receiving the information of time, information of time at which the sound signal is sensed by the first microphone and the second microphone, respectively, may be received from the pointing apparatus, and in the operation of determining the oriented direction, the oriented direction of the pointing apparatus may be determined based on a difference of the sensed times of the first microphone and the second microphone determined based on the information of time.

The operation of determining the oriented direction may include determining a horizontal oriented direction corresponding to a horizontal angle of the pointing apparatus determined based on the difference of the sensed times; and determining a vertical oriented direction of the pointing apparatus based on motion information of the pointing apparatus sensed by a sensor included in the pointing apparatus.

According to another example of the present disclosure, a control method of a pointing apparatus includes sensing a sound signal output from at least one speaker included in a display apparatus; determining an oriented direction based on information of time at which the sound signal is sensed; determining a reference position of a pointing object to be displayed on a screen of the display apparatus based on the oriented direction; and transmitting a control signal allowing the pointing object to be displayed at the reference position.

According to another example of the present disclosure, a pointing system including a display apparatus and a pointing apparatus for controlling the display apparatus includes the pointing apparatus configured to transmit a trigger signal for setting a reference position of a pointing object to be displayed on a screen of the display apparatus and to transmit information of time at which a sound signal is sensed by a microphone included in the pointing apparatus to the display apparatus when the sound signal is output through at least one speaker included in the display apparatus; and the display apparatus is configured to output the sound signal through the at least one speaker when the trigger signal is received from the pointing apparatus, to determine an oriented direction of the pointing apparatus based on the information of time when the information of time is received, and to display the pointing object at the reference position determined based on the oriented direction.

According to the various example embodiments of the present disclosure, the initial start point of the cursor may be more conveniently set in the absolute pointing scheme.

BRIEF DESCRIPTION OF THE DRAWINGS

The above and/or other aspects of the present disclosure will be more apparent from the following detailed description, taken in conjunction with the accompanying drawings, in which like reference numerals refer to like elements, and wherein:

FIG. 1 is a diagram illustrating example movement of a pointing object depending on a movement of a pointing apparatus;
FIG. 2 is a block diagram illustrating an example configuration of a display apparatus;
FIG. 3 is a block diagram illustrating an example configuration of a pointing apparatus;

FIG. 4 is a diagram illustrating an example method for determining a horizontal position of the pointing apparatus;

FIG. 5 is a diagram illustrating an example method for determining a horizontal oriented direction depending on the movement of the pointing apparatus;

FIG. 6 is a diagram illustrating an example method for determining a vertical oriented direction of the pointing apparatus;

FIG. 7 is a diagram illustrating an example movement of a pointing object depending on an oriented angle change of a pointing apparatus;

FIG. 8 is a diagram illustrating an example method for determining a horizontal oriented direction depending on the oriented angle change of the pointing apparatus;

FIG. 9 is a diagram illustrating an example method for determining a horizontal oriented direction depending on an oriented angle change of a pointing apparatus;

FIG. 10 is a diagram illustrating an example method for determining a horizontal oriented direction and a vertical oriented direction depending on the movement and the oriented angle change of the pointing apparatus;

FIG. 11 is a block illustrating an example configuration of a pointing system;

FIG. 12 is a sequence diagram illustrating an example process of determining an oriented direction in the pointing system;

FIG. 13 is a block diagram illustrating an example configuration of a display apparatus;

FIG. 14 is a flowchart illustrating an example control method of a display apparatus; and

FIG. 15 is a flowchart illustrating an example control method of a pointing apparatus.

DETAILED DESCRIPTION

Example embodiments of the present disclosure may be diversely modified. Accordingly, various example embodiments are illustrated in the drawings and are described in greater detail in the following detailed description. However, it is to be understood that the present disclosure is not limited to a specific example embodiment, but includes all modifications, equivalents, and substitutions without departing from the scope and spirit of the present disclosure. Also, well-known functions or constructions may not be described in detail since they may obscure the disclosure with unnecessary detail.

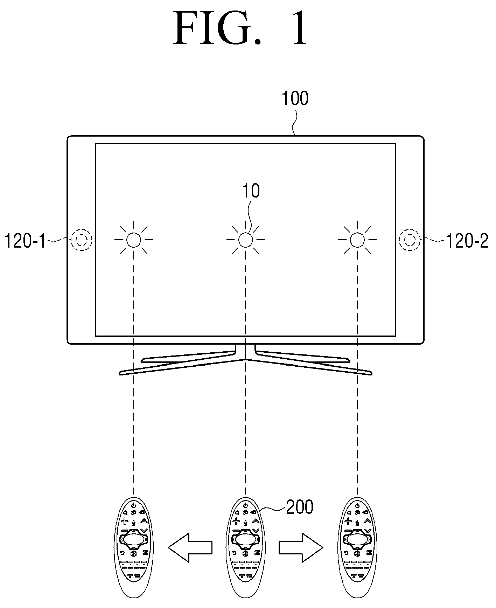

FIG. 1 is a diagram illustrating an example pointing system. The disclosure may be applied to a system including a pointing apparatus 200, and a display apparatus 100 receiving a signal from the pointing apparatus 200 or transmitting and receiving the signal with the pointing apparatus 200, as illustrated in FIG. 1.

The display apparatus 100 according to an example embodiment of the present disclosure, which is a device controlled by the pointing apparatus 200, includes, for example, TV, and includes various devices which may be remotely controlled such as various kinds of monitors, computers, notebook computers, smart TVs, and the like.

The pointing apparatus 200, which is an apparatus for remotely controlling the display apparatus 100, may receive user command and transmit a signal corresponding to the received user command to the display apparatus 100.

For example, the pointing apparatus 200 may be implemented as a three-dimensional (3D) pointing apparatus that senses a motion of the pointing apparatus 200 on a 3D space of, for example, XYZ and transmits a signal with respect to the sensed 3D motion to the display apparatus 100. For example, the 3D motion (hereinafter, referred to as a motion) may correspond to command for controlling the display apparatus 100. For example, a user may move the pointing apparatus 200 on a space, thereby transferring a predetermined command to the display apparatus 100. For example, the pointing apparatus 200 might transmit motion information itself corresponding to the sensed motion, but may convert the motion information corresponding to the sensed motion into a control signal for controlling the display apparatus 100 and transmit the control signal, as needed.

The display apparatus 100 may control a movement state of a pointing object (e.g., a cursor pointer 10, etc.) displayed on a user interface screen (hereinafter, referred to as an UI screen) provided through the display apparatus 100, depending on a motion of the pointing apparatus 200.

For example, the display apparatus 100 may be operated according to a relative pointing scheme controlling the movement state of the pointing object 10 based on only an amount of motion of the pointing apparatus 200 and an absolute pointing scheme controlling the movement state of the pointing object 10 based on an absolute coordinate from a reference position. For example, the reference position may refer to a position at which the pointing object 10 is initially displayed depending on an oriented direction of the pointing apparatus 200, in the absolute pointing scheme. According to the absolute pointing scheme, since the pointing object 10 may be displayed to be moved to a position corresponding to the oriented direction of the pointing apparatus 200, an intuitive control of the display apparatus 100 may be implemented.

The display apparatus 100 according to the present disclosure may be operated according to the absolute pointing scheme in an operation of setting the reference position, and may be operated according to the absolute pointing scheme or the relative pointing scheme in an operation of controlling the movement state of the pointing object 10 from the reference position.

For example, the display apparatus 100 may set the reference position of the pointing object 10 according to the absolute pointing scheme using a first speaker 120-1 and a second speaker 120-2 included, for example, in the display apparatus 100. Hereinafter, example embodiments will be described in greater detail below with reference to the accompanying drawings.

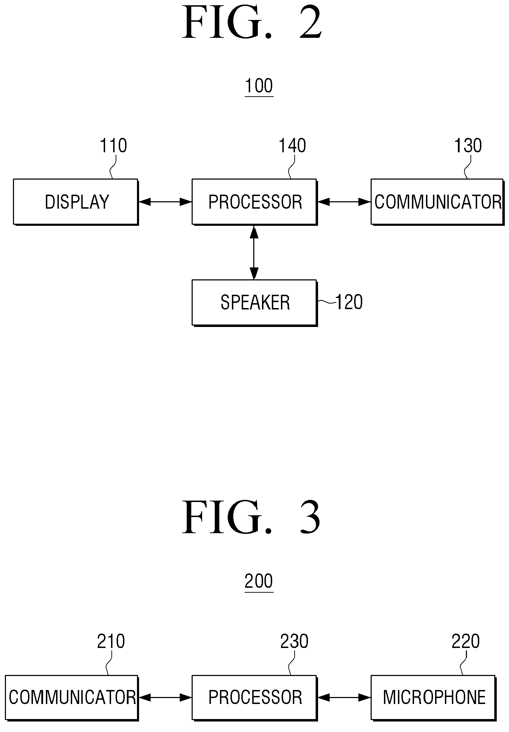

FIG. 2 is a block diagram illustrating an example configuration of the display apparatus.

Referring to FIG. 2, the display apparatus 100 according to an example embodiment of the present disclosure includes a display (e.g., including a display panel and display circuitry) 110, a speaker 120, and a communicator (e.g., including communication circuitry) 130.

The display 110 may provide various contents screens. For example, the contents screens may include various contents such as an image, a moving image, a text, music, and the like, an application execution screen including the various contents, a graphic user interface (GUI) screen, and the like.

The display 110 may, for example, be implemented in various forms of displays such as a liquid crystal display (LCD) panel, organic light emitting diodes (OLED), a liquid crystal on silicon (LCoS), a digital light processing, and the like. In addition, the display 110 may include a driving circuit, a backlight unit, and the like which may be implemented in forms such as an a-si TFT, a low temperature poly silicon (LTPS) TFT, an organic TFT (OTFT), and the like.

The speaker 120 refers, for example, to a component that outputs a sound signal. One or more speakers 120 may be provided depending on example embodiments. In an example in which the speakers 120 are configured to include a first speaker and a second speaker, sound signals output from the respective speakers 120 may be sound signals having different frequencies. For example, a first sound signal output from the first speaker may have a frequency of 10Hz, and a second sound signal output from the second speaker may have a frequency of 20Hz.

The communicator 130 includes communication circuitry that performs communications with the pointing apparatus 200. The communicator 130 performs communications with the pointing apparatus 200 including the microphone for sensing the sound signal. For example, when a preset event occurs, the communicator 130 may perform communication according to a preset communication scheme with the pointing apparatus 200 to be in an interlocked state. For example, the interlocking may refer, for example, to all of states in which communication may be performed, such as an operation in which communication between the display apparatus 100 and the pointing apparatus 200 is initialized, an operation in which a network is formed, an operation in which an apparatus paring is performed, and the like. For example, device identification information of the pointing apparatus 200 may be provided to the display apparatus 100. As a result, a pairing process between two apparatuses may be performed. Further, when the preset event occurs in the display apparatus 100 or the pointing apparatus 200, the communicator 130 may search peripheral apparatuses through, for example, a digital living network alliance (DLNA) technology and may perform a pairing with the searched apparatus to be in the interlocked state.

The communicator 130 may perform communication with the pointing apparatus 200 through various communication schemes and circuitry using, for example, radio frequency (RF) such as Bluetooth, Wi-Fi, ZigBee, Near Field Communication (NFC), and the like, infrared (IR), and the like. The communicator 130 may include a ZigBee communication element (not shown), a Bluetooth communication element (not shown), a Wi-Fi communication element (not shown), and the like.

For example, the communicator 130 may receive a signal corresponding to a motion of the pointing apparatus 200 from the pointing apparatus 200.

The processor 140 is a component including processing circuitry that is configured to control a general operation of the display apparatus 100.

The processor 140 is configured to display the pointing object on a screen based on the preset event, and to control the movement state of the pointing object based on the signal received from the pointing apparatus 200. For example, the pointing apparatus 200 may be implemented to recognize the motion as described above and to transmit a signal corresponding to the recognized motion to the display apparatus 100.

For example, when the processor 140 receives a trigger signal for setting the reference position of the pointing object on the screen of the display 110 from the pointing apparatus 200, the processor 140 may be configured to output the sound signals through one of a plurality of speakers 120 included in the display apparatus 100. In this example, the pointing apparatus 200 may be configured to sense the sound signal, and the pointing object is displayed on the reference position determined based on the oriented direction of the pointing apparatus 200 determined based on information of time at which the sound signal is sensed.

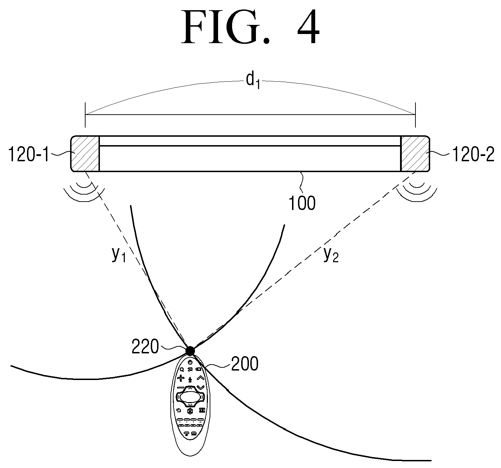

For example, a method for determining a horizontal oriented direction corresponding to the position of the pointing apparatus 200 in the display apparatus 100 including the first speaker and the second speaker will be described in greater detail below with reference to FIGS. 4 to 6.

First Example Embodiment in which Oriented Direction is Determined Depending on Horizontal Position of Pointing Apparatus

FIG. 4 is a diagram illustrating an example method for determining a horizontal position of the pointing apparatus.

According to this example embodiment, the display apparatus 100 may include the first speaker 120-1 outputting the first sound signal and the second speaker 120-2 outputting the second sound signal.

It is assumed in this example embodiment that a horizontal oriented angle of the pointing apparatus 200 to the display apparatus 100 is 0°. For example, in the case in which the pointing apparatus 200 is not horizontally twisted and is in a space within a horizontal width of the display 110 of the display apparatus 100, the pointing object 10 may be moved.

The first sound signal and the second sound signal may be sound signals having different frequencies. As a result, the processor 140 may be configured to separate the first sound signal and the second sound signal from each other for each frequency by analyzing a component of the sound signal sensed by a microphone included in the pointing apparatus 200. As a result, the processor 140 may be configured to determine the respective distances between the first speaker 120-1 and the second speaker 120-2, and the pointing apparatus 200.

According to the present example embodiment, the processor 140 may be configured to receive information of time at which the first sound signal and the second sound signal are each sensed by the microphone 220, from the pointing apparatus 200, and may determine an oriented direction of the pointing apparatus 200 based on a difference of the sensed times of the first sound signal and the second sound signal determined based on the information of time.

For example, when the processor 140 receives the trigger signal from the pointing apparatus 200, the processor 140 may be configured to receive the information of time at which the first sound signal and the second sound signal are each sensed by the microphone 220. For example, the information of time may be information of time at which the first sound signal and the second sound signal are each sensed based on a time at which the trigger signal is received, or a record file in which the first sound signal and the second sound signal are each recorded. For example, in the case in which the pointing apparatus 200 is positioned at left or right from the center of the display apparatus 100, a distance between the microphone 220 and the first speaker 120-1 is different from a distance between the microphone and the second speaker 120-2. Because the speed of the sound signal is always the same, e.g., 333m/s, there may be a difference between the time at which the microphone 220 senses the first sound signal and the time at which the microphone 220 senses the second sound signal. The processor 140 may be configured to receive the information of time including information on a difference of the sensed times from the pointing apparatus 200, to determine the oriented direction of the pointing apparatus 200.

Referring to FIG. 4, the processor 140 may be configured to determine a distance $y_1$ from the first speaker 120-1 to the microphone 220 and a distance $y_2$ from the second speaker 120-2 to the microphone 220, from the information of time received from the pointing apparatus 200. For example, the pointing apparatus 200 may separate the sensed sound signal for each frequency band to be separated into the first sound signal and the second sound signal, and may transmit information on time at which the first sound signal is initially sensed to the display apparatus 100. In this example, the processor 140 may be configured to determine the distance $y_1$ from the received information, using a difference between a time at which the first sound signal is initially sensed by the microphone 220 and a time at which the first sound signal is output from the first speaker 120-1.

When it is assumed that a time at which the first sound signal and the second sound signal are output is $t_1$, a time at which the first sound signal is initially sensed is $t_2$, and a time at which the second sound signal is initially sensed is $t_3$, the distances $y_1$ and $y_2$ may be determined by the following Mathematical expression.

[Mathematical expression 1]

$$Y_1 = \frac{\text{Sensed Time of First Sound Signal}(t_2) - \text{Output Time of First Sound Signal}(t_1)}{\text{Sound Speed(m/s)}}, Y_2 = \frac{\text{Sensed Time of Second Sound Signal}(t_3) - \text{Output Time of Second Sound Signal}(t_1)}{\text{Sound Speed(m/s)}}$$

In the example in which $y_1$ and $y_2$ are determined by the above mathematical expression, a horizontal position of the pointing apparatus 200 may be determined using trigonometry. For example, when it is assumed that a distance $d_1$ between the first speaker 120-1 and the second speaker 120-2 in the display apparatus 100 is known information, if a distance spaced apart from the first speaker 120-1 by $y_1$ in the front of the display apparatus 100 and a distance spaced apart from the second speaker 120-2 by $y_2$ are determined, three elements (lengths of three sides) of a triangle may be determined, and the processor 140 may determine the horizontal position of the pointing apparatus 200 using trigonometry as illustrated, for example, in FIG. 4.

The processor 140 may be configured to determine the horizontal position of the pointing apparatus 200 based on the difference of the sensed times for the first sound signal and the second sound signal in the microphone 220 included in the pointing apparatus 200.

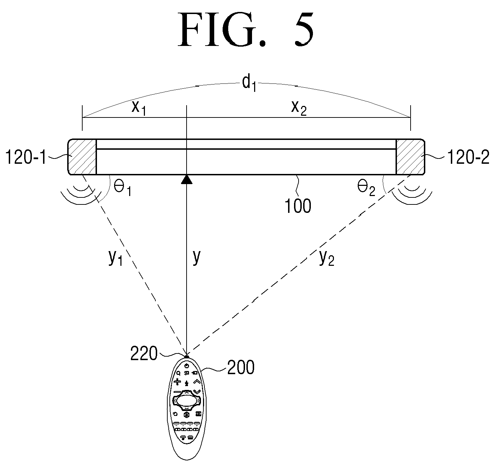

FIG. 5 is a diagram illustrating an example method for determining a horizontal oriented direction depending on the movement of the pointing apparatus.

As illustrated in FIG. 5, if the horizontal position of the pointing apparatus 200 is determined, the processor 140 may be configured to determine the horizontal oriented direction corresponding to the determined horizontal position of the pointing apparatus 200, to determine a horizontal position of the pointing object 10 to be displayed on the display 110.

The processor 140 may be configured to determine an included angle $\theta_1$ between $y_1$ and $d_1$ and an included angle $\theta_2$ between $y_2$ and $d_1$, using the lengths ($d_1$, $y_1$, $y_2$) of three sides of the triangle having the first speaker 120-1, the second speaker 120-2, and the microphone 220 as vertices, using the determined horizontal position of the pointing apparatus 200. $\theta_1$ and $\theta_2$ may be determined by the following second law of cosines.

[Mathematical expression 2]

$$\cos\theta_1 = \frac{y_1^2 + d_1^2 - y_2^2}{2y_1 d_1}, \cos\theta_2 = \frac{y_2^2 + d_1^2 - y_1^2}{2y_2 d_1}$$

If values of $\cos\theta_1$ and $\cos\theta_2$ are derived, the processor 140 may be configured to determine a position $x_1$ at which the pointing object is displayed on the basis of the first speaker 120-1, or a position $x_2$ at which the pointing object is displayed on the basis of the second speaker 120-2, by the following mathematical expression.

[Mathematical expression 3]

$$x_1 = y_1 \cos\theta_1, x_2 = y_2 \cos\theta_2$$

Thus, the processor 140 may be configured to determine the horizontal oriented direction corresponding to the determined position of the pointing apparatus 200, and may be configured to determine the horizontal position at which the pointing object is to be displayed on the screen based on the determined horizontal oriented direction.

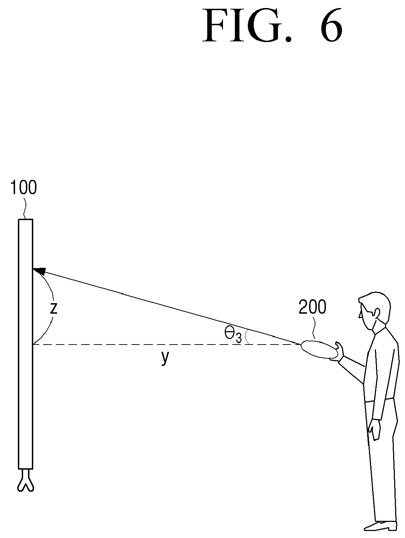

The processor 140 may be configured to determine a vertical oriented direction of the pointing apparatus 200 based on motion information of the pointing apparatus 200 sensed by a sensor included, for example, in the pointing apparatus 200. A more detailed description thereof will be described below with reference to FIG. 6.

FIG. 6 is a diagram illustrating an example method for determining a vertical oriented direction of the pointing apparatus.

The pointing apparatus 200 may include, for example, a six-axis sensor including, for example, an acceleration sensor and a gyro sensor for determining the vertical oriented direction. The acceleration sensor, which may, for example, refer to a sensor measuring a motion on a space of the pointing apparatus 200, performs a function of sensing a change in acceleration, a change in angular acceleration, and the like generated when the user moves the pointing apparatus 200. The acceleration sensor may sense acceleration of gravity in three-axis directions of an x axis, a y axis, and a z axis, and the pointing apparatus 200 may obtain information related to an inclination of the pointing apparatus 200 using the acceleration sensor.

The gyro sensor, which may, for example, refer to a sensor capable of measuring height, rotation, gradient, and the like of the pointing apparatus 200, may be included in the six-axis sensor together with the acceleration sensor. The pointing apparatus 200 may measure rotational angular velocity of the pointing apparatus 200 using the gyro sensor, and may know a current direction, or the like using inertial force of a rotating object.

The processor 140 may be configured to determine the vertical oriented direction of the pointing apparatus 200 by receiving information related to a motion such as the height of the pointing apparatus 200 sensed from the pointing apparatus 200, the gradient of the pointing apparatus 200, and the like, and may be configured to display the pointing object at a position on the screen corresponding to the determined vertical oriented direction.

For example, when the user holds the pointing apparatus 200 at a predetermined height as illustrated in FIG. 6, in the case in which the pointing apparatus 200 is tilted by an angle of $\theta_3$ in an upward direction from a horizontal state, the pointing apparatus 200 may transmit motion information including information on the height of the pointing apparatus 200 sensed by the gyro sensor, information on the gradient sensed by the gyro sensor or the acceleration sensor, and the like, to the display apparatus 100.

In this example, the processor 140 may be configured to set a position spaced apart from a vertical position on the screen corresponding to the height of the pointing apparatus 200 by z, which is a distance corresponding to a tilted degree of the pointing apparatus 200, in the upward direction as a reference position using the distance y between the display apparatus 100 and the pointing apparatus 200 which is determined using trigonometry and the motion information received from the pointing apparatus 200, and may move the pointing object to the set reference position.

The processor 140 may be configured to determine an oriented direction of the pointing apparatus 200 based on the horizontal oriented direction of the pointing apparatus 200 determined based on the information of time at which the pointing apparatus 200 senses the sound signal and the vertical oriented direction of the pointing apparatus 200 determined based on motion information sensed by the pointing apparatus 200. The processor 140 may be configured to determine the position on the screen corresponding to the determined oriented direction as the reference position, and may be configured to display the pointing object at the determined reference position.

Second Example Embodiment in which Oriented Direction is Determined Depending on Horizontal Angle of Pointing Apparatus

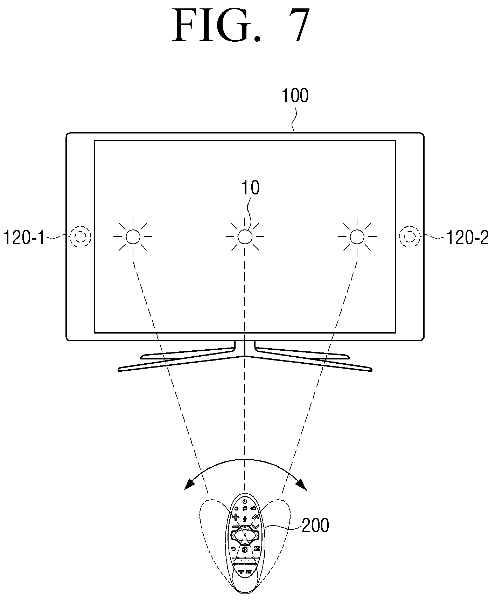

FIG. 7 is a diagram illustrating an example movement of a pointing object depending on an oriented angle change of a pointing apparatus.

As illustrated in FIG. 7, in the example in which the pointing apparatus 200 is rotated in a left direction or a right direction, the display apparatus 100 according to the example embodiment may display the pointing object 10 at a horizontal position on the screen corresponding to the horizontal oriented direction of the pointing apparatus 200 rotated based on the horizontal oriented angle of the pointing apparatus 200.

For example, according to the previous example embodiment, the reference position at which the pointing object is to be displayed is determined in the state in which the horizontal oriented angle of the pointing apparatus 200 to the display apparatus 100 is not 0° and is tilted in the horizontal direction. In this example, it is assumed that the pointing apparatus 200 is operated at a preset horizontal position spaced apart from the display apparatus 100 by a preset distance. For example, in the case in which the user operates the display apparatus 100 while sitting on a chair or a sofa spaced apart from the display apparatus 100 by a predetermined distance, the present example embodiment may be applied.

In addition, it is assumed in this example embodiment that the pointing apparatus 200 includes a first microphone and a second microphone spaced apart from each other by a preset distance. In addition, the display apparatus 100 may include only one speaker, or may include a first speaker and a second speaker outputting sound having the same frequency.

In this example, the processor 140 may be configured to receive information of time at which the sound signal is each sensed by the first microphone and the second microphone, from the pointing apparatus 200, and may be configured to determine a horizontal oriented direction of the pointing apparatus 200 based on a difference of the sensed times of the first microphone and the second microphone determined based on the information of time.

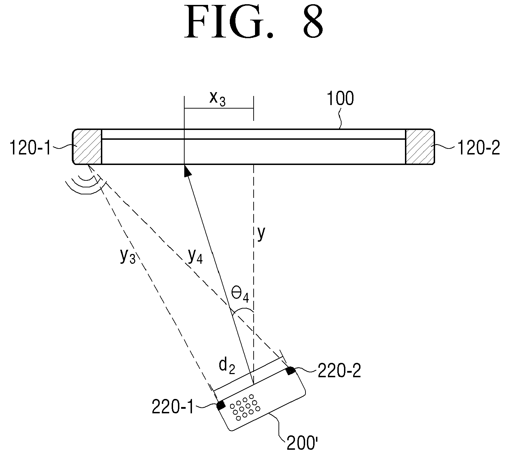

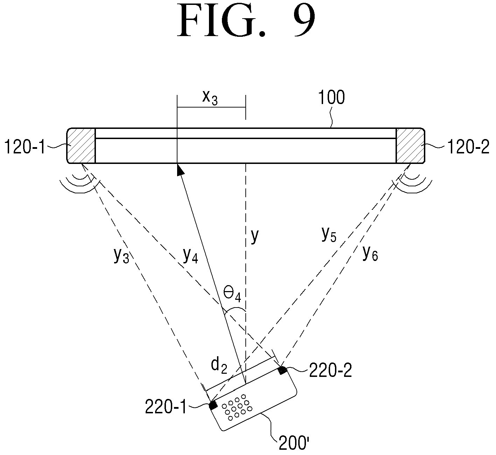

A method for determining a reference position of the pointing object based on the horizontal oriented angle of the pointing apparatus 200 will be described in greater detail below with reference to FIGS. 8 and 9.

FIG. 8 is a diagram illustrating an example method for determining a horizontal oriented direction depending on the oriented angle change of the pointing apparatus.

As illustrated in FIG. 8, the processor 140 may be configured to determine a distance y3 from the first speaker 120-1 to a first microphone 220-1 of the pointing apparatus 200' and a distance y4 from the first speaker 120-1 to a second microphone 220-2, from the information of time received from the pointing apparatus 200'.

For example, the pointing apparatus 200' may transmit the trigger signal to the display apparatus 100, and may sense a sound signal output the first speaker 120-1 after a preset time after transmitting the trigger signal. In this example, the sound signal may be sensed by the first microphone 220-1 and the second microphone 220-2 included in the pointing apparatus 200', and the pointing apparatus 200' may transmit the information of time sensed by the first microphone 220-1 and the second microphone 220-2, respectively, to the display apparatus 100. For example, the information of time may refer to information of time at which the sound signal is sensed by the first microphone 220-1 and the second microphone 220-2, respectively.

The processor 140 may be configured to determine a horizontal oriented direction of the pointing apparatus 200' based on a difference of the sensed times of the sound signal determined based on the received information of time.

Referring to FIG. 8, since the first microphone 220-1 and the second microphone 220-2 included in the pointing apparatus 200' are spaced apart from each other by $d_2$, there may be a difference in times at which the first microphone 220-1 and the second microphone 220-2 sense the sound signal output from the first speaker 120-1. It is defined that a distance between the first speaker 120-1 and the first microphone 220-1 is $y_3$, and a distance between the first speaker 120-1 and the second microphone 220-2 is $y_4$. In this example, based on a difference ta of the sensed times of the sound signal output from the first speaker 120-1 in the case in which the horizontal oriented angle of the pointing apparatus 200' is 0°, in the case in which the pointing apparatus 200' is rotated in the left direction by an angle of $\theta_4$, as the distances $y_3$ and $y_4$ are changed by the rotation angle, a difference $t_b$ of the sensed times of the sound signal sensed by the first microphone 220-1 and the second microphone 220-2 may differ from $t_a$.

For example, the difference $t_b$ of the sensed times in the case in which the pointing apparatus 200' is rotated in the left direction by the angle of $\theta_4$ is different from ta in the case in which the horizontal oriented angle is 0°, and the processor 140 may be configured to determine the horizontal oriented angle $\theta_4$ of the pointing apparatus 200' based on the above-mentioned difference. In this example, the horizontal oriented angle $\theta_4$ may be proportional to a difference between $t_a$ and $t_b$.

The processor 140 may be configured to determine a horizontal oriented angle of the pointing apparatus 200' by trigonometry using distances of $y_3$, $y_4$, and $d_2$. However, the processor 140 may also be configured to determine the horizontal oriented angle using, for example, a lookup table storing information on a rotation angle corresponding to $t_b$ in the pointing apparatus 200' positioned at a predetermined position. The lookup table may be prestored in a storage (not shown) included in the display apparatus 100.

If the horizontal angle $\theta_4$ of the pointing apparatus 200' is determined, the pointing object may be displayed at a position spaced apart from a central portion of the display apparatus 100 in the left direction by a distance x3 corresponding to the determined horizontal angle $\theta_4$.

FIG. 9 is a diagram illustrating an example method for determining a horizontal oriented direction depending on an oriented angle change of a pointing apparatus.

As illustrated in FIG. 9, in the example in which the first sound signal output from the first speaker 120-1 of the display apparatus 100 and the second sound signal output from the second speaker 120-2 thereof are simultaneously used, accuracy for determining the horizontal oriented angle of the pointing apparatus 200' may be further increased. In this example, a frequency of the first sound signal and a frequency of the second sound signal are different from each other, and the pointing apparatus 200' may classify the sensed sound signals based on a frequency component to transmit information of time at which the second sound signal is sensed by the first microphone 220-1 and time at which the second sound signal is sensed by the second microphone 220-2 to the display apparatus 100.

The display apparatus 100 may be configured to determine a distance $y_5$ between the first microphone 220-1 and the second speaker 120-2, and a distance $y_6$ between the second microphone 220-2 and the second speaker 120-2 based on the received information of time, to determine the horizontal angle $\theta_4$ of the pointing apparatus 200', thereby correcting error that may occur in the example embodiment of FIG. 8.

Meanwhile, in the second example embodiment, since a method for determining a vertical oriented direction of the pointing apparatus 200' is the same as that of the first example embodiment, a description thereof will be omitted.

Third Example Embodiment in which Oriented Direction is Determined Depending on Horizontal Position and Horizontal Angle of Pointing Apparatus

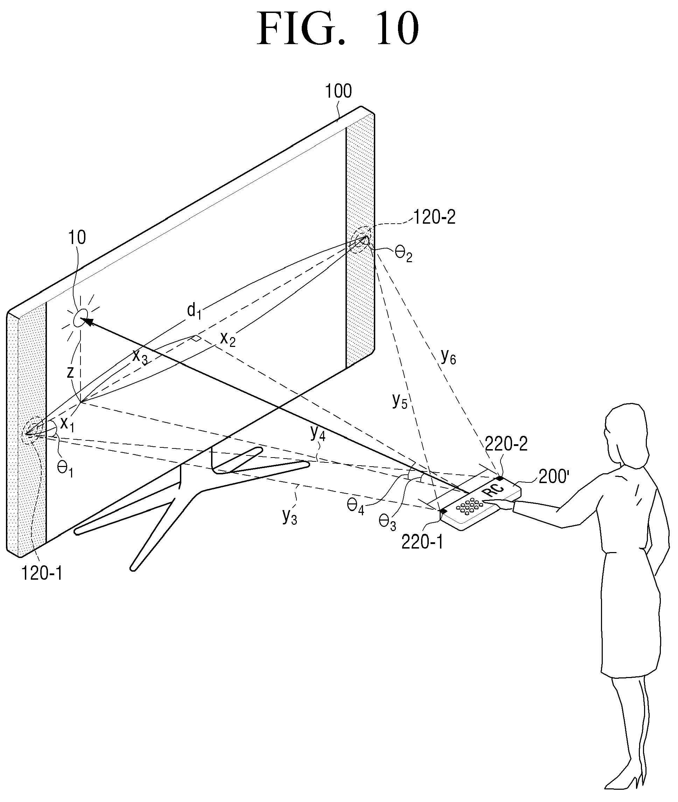

FIG. 10 is a diagram illustrating an example method for determining a horizontal oriented direction and a vertical oriented direction depending on the movement and the oriented angle change of the pointing apparatus.

According to the third example embodiment, the display apparatus 100 may include the first speaker 120-1 outputting the first sound signal and the second speaker 120-2 outputting the second sound signal. In addition, the pointing apparatus 200' may include the first microphone 220-1 and the second microphone 220-2. The third example embodiment, combines features of of the first example embodiment and the second example embodiment, is an example embodiment in which the oriented direction of the pointing apparatus 200' is determined by determining all of the horizontal position and the horizontal angle of the pointing apparatus 200', and a final reference position of the pointing object 10 is set on the screen depending on the determined oriented direction.

Further, according to the third example embodiment, the first sound signal and the second sound signal may be sound signals having different frequencies, and the display apparatus 100 may determine the oriented direction of the pointing apparatus 200' regardless of the horizontal oriented angle and the position of the pointing apparatus 200'.

According to the present example embodiment, when the processor 140 is configured to receive the trigger signal from the pointing apparatus 200', the processor 140 may be configured to receive information of time at which the first sound signal and the second sound signal are each sensed by the microphone 220-1. As illustrated in FIG. 10, the processor 140 may be configured to determine a distance $y_3$ from the first speaker 120-1 to the microphone 220-1 and a distance $y_5$ from the second speaker 120-2 to the microphone 220-1, by the information of time received from the pointing apparatus 200'. A mathematical expression thereof is the same as that expressed in Mathematical expression 1 above.

In the case in which $y_3$ and $y_5$ are determined, a horizontal position of the pointing apparatus 200' may be determined using trigonometry. When it is assumed that a distance $d_1$ between the first speaker 120-1 and the second speaker 120-2 in the display apparatus 100 is known information, if a distance spaced apart from the first speaker 120-1 by $y_3$ in the front of the display apparatus 100 and a distance spaced apart from the second speaker 120-2 by $y_5$ are determined, three elements of a triangle may be determined, and the processor 140 may be configured to determine the horizontal position of the pointing apparatus 200' using trigonometry. Since detailed contents thereof are the same or similar to that described in the example embodiments above, a description thereof will be omitted.

The horizontal oriented angle of the pointing apparatus 200' is $\theta_4$, and the processor 140 may be configured to receive information of time at which the first sound signal output from the first speaker 120-1 of the display apparatus 100 is each sensed by the first microphone 220-1 and the second microphone 220-2, from the pointing apparatus 200', and may be configured to determine the horizontal oriented direction of the pointing apparatus 200' based on a difference of the sensed times of the first microphone 220-1 and the second microphone 220-2 determined based on the information of time.

For example, the pointing apparatus 200' may sense the first sound signal output from the first speaker 120-1 after a preset time after transmitting the trigger signal to the display apparatus 100. In this example, the first sound signal may be sensed by the first microphone 220-1 and the second microphone 220-2 included in the pointing apparatus 200', and the pointing apparatus 200' may transmit the information of time sensed by the first microphone 220-1 and the second microphone 220-2, respectively, to the display apparatus 100. In this example, the processor 140 may determine the horizontal oriented direction of the pointing apparatus 200' based on a difference of the sensed times of the first sound signal determined based on the received information of time.

Referring to FIG. 10, based on a difference $t_a$ of the sensed times of the first sound signal output from the first speaker 120-1 of the first microphone 220-1 and the second microphone 220-2 in the case in which the horizontal oriented angle of the pointing apparatus 200' is 0°, a difference $t_b$ of the sensed times of the first sound signal sensed by the first microphone 220-1 and the second microphone 220-2 may be as much as an angle of $\theta_4$ at which the pointing apparatus 200' is rotated in the left direction. In this case, the horizontal oriented angle $\theta_4$ may be proportional to a difference between $t_a$ and $t_b$. Since detailed contents about the determining of the horizontal position on the screen of the pointing object depending on the horizontal oriented angle are the same or similar to that described in the above example embodiments, a description thereof will be omitted.

The processor 140 may be configured to determine a vertical oriented direction of the pointing apparatus 200' by receiving information related to a motion such as a height of the pointing apparatus 200' sensed from the pointing apparatus 200', a gradient of the pointing apparatus 200', and the like. The processor 140 may be configured to display the pointing object at a position on the screen corresponding to the determined vertical oriented direction.

As illustrated in FIG. 10, in the example in which the pointing apparatus 200' is tilted by an angle of $\theta_3$ in an upward direction from a horizontal state, the pointing apparatus 200' may transmit motion information including information on the height of the pointing apparatus 200' sensed by the gyro sensor, information on the gradient sensed by the gyro sensor or the acceleration sensor, and the like, to the display apparatus 100. In this example, the processor 140 may be configured to set a position spaced apart from a vertical position on the screen corresponding to the height of the pointing apparatus 200' by z, which is a distance corresponding to a tilted degree of the pointing apparatus 200', in the upward direction as a reference position using the motion information received from the pointing apparatus 200', and may be configured to display the pointing object at the set reference position.

The processor 140 may be configured to determine the horizontal position of the pointing apparatus 200 based on the information of time at which the pointing apparatus 200' senses the first sound signal output from the first speaker 120-1 of the display apparatus 100 and the second sound signal output from the second speaker 120-2 thereof. In addition, the processor 140 may be configured to determine the horizontal oriented angle of the pointing apparatus 200' based on the information of time at which the first sound signal is each sensed by the first microphone 220-1 and the second microphone 220-2 of the pointing apparatus 200' depending on the horizontal oriented angle of the pointing apparatus 200. The processor 140 may be configured to determine the horizontal oriented direction of the pointing apparatus 200' based on the determined horizontal position and horizontal oriented angle of the pointing apparatus 200'

In addition, the processor 140 may be configured to determine a vertical oriented direction of the pointing apparatus 200' based on the motion information sensed by the acceleration sensor and the gyro sensor of the pointing apparatus 200'.

The processor 140 may be configured to set positions on the screen corresponding to the determined horizontal oriented direction and vertical oriented direction, respectively, depending on the determined horizontal oriented direction and vertical oriented direction as a reference position, and may display the pointing object at the set reference position. Thereafter, a movement of the pointing object on the screen may be implemented by any one of an absolute pointing scheme and a relative pointing scheme.

FIG. 3 is a block diagram illustrating an example configuration of a pointing apparatus.

Referring to FIG. 3, the pointing apparatus 200 according to an example embodiment of the present disclosure includes a communicator (e.g., including communication circuitry) 210, a microphone 220, and a processor (e.g., including processing circuitry) 230.

The communicator 210 is configured to perform communication with the display apparatus 100, and since a detailed configuration thereof is similar to the communicator 130 of the display apparatus 100, a detailed description thereof will be omitted.

The microphone 220 is a component for sensing the sound signal output from the display apparatus 100. The microphone 220 may sense the first sound signal and the second sound signal in the first example embodiment in which the frequencies are different. In addition, the microphone 220 may include the first microphone 220-1 and the second microphone 220-2 of the second example embodiment.

According to the first example embodiment, the processor 230 may be configured to determine a difference of the sensed times of the first sound signal and the second sound signal depending on information of time at which the first sound signal and the second sound signal are each sensed by the microphone 220, and may be configured to determine a horizontal position of the pointing apparatus 200 based on the difference of the sensed times.

For example, the processor 230 may be configured to separate a component of the sensed sound signal into the first sound signal and the second sound signal depending on frequency bands, may be configured to determine a difference of the sensed times of the first sound signal and the second sound signal depending on information of time at which the first sound signal and the second sound signal which are separated are sensed, and may be configured to determine the horizontal position of the pointing apparatus 200 to the display apparatus 100 based on the determined difference of the sensed times. In this example, the processor 230 may be configured to determine a reference position of the pointing object on the screen depending on an oriented direction corresponding to the determined horizontal position, and may be configured to transmit a control signal allowing the pointing object to be displayed at the determined reference position to the display apparatus 100.

In addition, the processor 230 may be configured to transmit the information of time at which the first sound signal and the second sound signal which are separated are sensed to the display apparatus 100. In this example, the processor 140 of the display apparatus 100 may be configured to determine the horizontal position based on the received information of time.

In addition, according to the second example embodiment, the processor 230 may be configured to determine a difference of the sensed times of the first microphone 220-1 and the second microphone 220-2 depending on information of time at which the sound signal is each sensed by the first microphone 220-1 and the second microphone 220-2, and may be configured to determine the horizontal oriented angle of the pointing apparatus 200 based on the difference of the sensed times. The processor 230 may be configured to determine a reference position of the pointing object on the screen depending on an oriented direction corresponding to the determined horizontal oriented angle, and may be configured to transmit a control signal allowing the pointing object to be displayed at the reference position to the display apparatus 100.

In addition, the processor 230 may be configured to transmit the information of time sensed by the first microphone 220-1 and the second microphone 220-2, respectively, to the display apparatus 100. In this example, the processor 140 of the display apparatus 100 may be configured to determine the horizontal oriented angle based on the received information of time.

The pointing apparatus 200 may include, for example, at least one of an acceleration sensor and a gyro sensor. In this example, the processor 230 may be configured so that the vertical oriented direction is determined based on the motion information sensed by at least one of the acceleration sensor and the gyro sensor, a reference position for the pointing object on the screen of the display apparatus 100 is determined depending on the determined vertical oriented direction, and a control signal allowing the pointing object to be displayed at the determined reference position is transmitted to the display apparatus 100.

In addition, the processor 230 may be configured to transmit the motion information sensed by the at least one of the acceleration sensor and the gyro sensor to the display apparatus 100. In this example, the processor 140 of the display apparatus 100 performs the determining of the vertical oriented angle based on the received motion information.

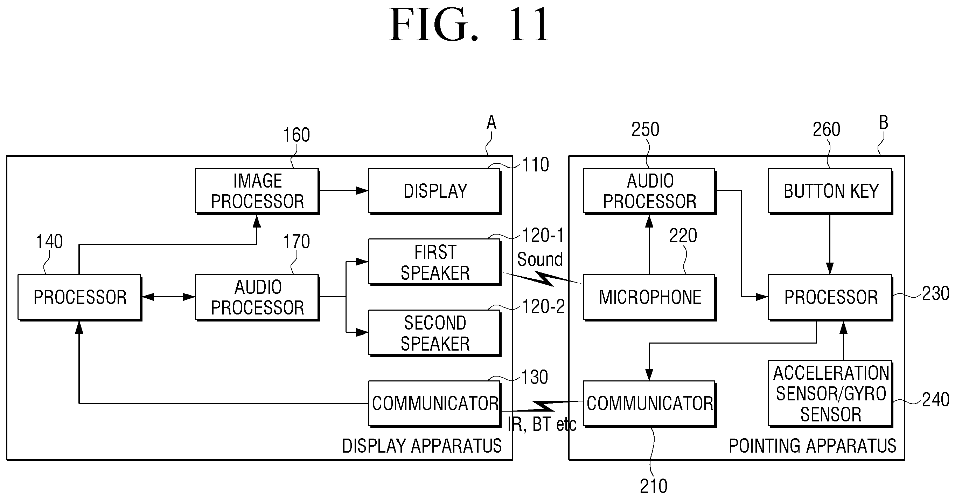

FIG. 11 is a block diagram illustrating an example configuration of a pointing system.

As illustrated in FIG. 11, the pointing system may include a display apparatus A and a pointing apparatus B for controlling the display apparatus A. The display apparatus A may include the display 110, the first speaker 120-1, the second speaker 120-2, the communicator (e.g., including communication circuitry) 130, the processor (e.g., including processing circuitry) 140, an image processor (e.g., including image processing circuitry) 160, and an audio processor (e.g., including audio processing circuitry) 170, and may further include a storage (not shown), as needed.

The pointing apparatus B may include the communicator (e.g., including communication circuitry) 210, the microphone 220, the processor (e.g., including processing circuitry) 230, the acceleration sensor and gyro sensor 240, an audio processor (e.g., including audio processing circuitry) 250, and a button key 260. A description of portions overlapping with the description in FIGS. 2 and 3 will be omitted.

If a user command is input through the button key 260, the pointing apparatus B may transmit a trigger signal for setting a reference position of the pointing object on a screen of the display apparatus A to the display apparatus A through the communicator 210. In this example, the trigger signal may be transmitted, for example, by an IR communication scheme or a BT communication scheme. If the communicator 130 of the display apparatus A receives the trigger signal, the processor 140 of the display apparatus A may be configured to convert a sound signal which is currently output into a first sound signal and a second sound signal having different frequencies using the audio processor 170, and may be configured to output the first sound signal and the second sound signal using the first speaker 120-1 and the second speaker 120-2. In this example, if the pointing apparatus B senses the sound signal using the microphone 220, the audio processor 250 may separate the sound signal into the first sound signal and the second sound signal for each frequency band.

The processor 230 of the pointing apparatus B may be configured to transmit information of time at which the respective sound signals are sensed to the display apparatus A through the communicator 210. In addition, the processor 230 may be configured to analyze height, gradient, rotation, motion, and the like of the pointing apparatus B sensed by the acceleration sensor and the gyro sensor 240 and may be configured to transmit information on the analyzed height, gradient, rotation, motion, and the like of the pointing apparatus B to the display apparatus A.

The processor 140 of the display apparatus A may be configured to analyze the information of time, the information of motion, and the like received by the pointing apparatus B to determine an oriented direction including a horizontal oriented direction and a vertical oriented direction of the pointing apparatus B, and the image processor 160 may be configured to process an image so that the pointing object is displayed at a position on the screen corresponding to the determined oriented direction. The processed image is displayed using the display 110, such that the pointing object may be displayed at the position on the screen corresponding to the oriented direction of the pointing apparatus B.

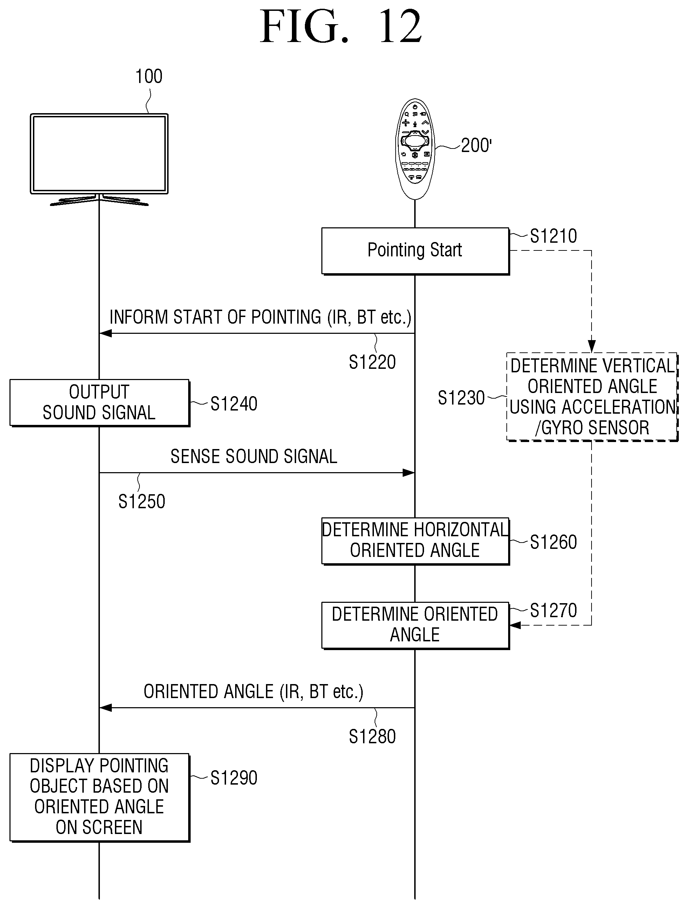

FIG. 12 is a sequence diagram illustrating an example process of determining an oriented direction in the pointing system.

As illustrated in FIG. 12, in the case in which the user presses a preset button in the pointing apparatus 200' including the microphone for sensing the sound signal to input a user command (S1210), a trigger signal informing a start of the pointing may be transmitted to the display apparatus 100 (S1220).

If the display apparatus 100 receives the trigger signal, the first sound signal and the second sound signal having, for example, different frequencies may be output from the first speaker and the second speaker included in the display apparatus 100 (S1240). If the pointing apparatus 200' senses the sound signal (S1250), the pointing apparatus 200' may classify the sensed sound signal into the first sound signal and the second sound signal.

In this example, the pointing apparatus 200' may determine the horizontal position of the pointing apparatus 200' using a difference between a time taken to sense the first sound signal by the microphone after the first sound signal is output from the display apparatus 100 and a time taken to sense the second sound signal by the microphone after the second sound signal is output.

In addition, the pointing apparatus 200' may determine the horizontal oriented angle of the pointing apparatus 200' using a difference between a time taken to sense the first sound signal by the first microphone after the first sound signal is output from the display apparatus 100 and a time taken to sense the second sound signal by the second microphone after the first sound signal is output (S1260).

The pointing apparatus 200' may determine the vertical oriented angle of the pointing apparatus 200' using the acceleration sensor and the gyro sensor (S1230), and may combine the determined horizontal oriented angle and vertical oriented angle to determine the oriented angle of the pointing apparatus 200' (S1270). The information on the determined oriented angle may be transmitted to the display apparatus 100 (S1280), and the display apparatus 100 may set the reference position of the pointing object on the screen depending on the oriented angle based on the information on the received oriented angle of the pointing apparatus 200' and may display the pointing object at the set reference position (S1290).

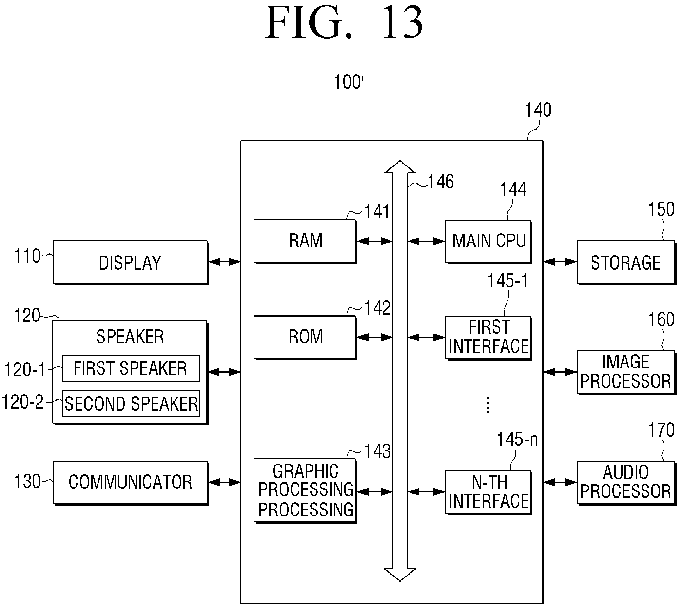

FIG. 13 is a block diagram illustrating an example configuration of a display apparatus. As illustrated in FIG. 13, a display apparatus 100' according to another example embodiment includes the display (e.g., including a display panel and display circuitry) 110, a speaker 120 including the first speaker 120-1, the second speaker 120-2, the communicator (e.g., including communication circuitry) 130, the processor (e.g., including processing circuitry) 140, a storage 150, the image processor (e.g., including image processing circuitry) 160, and the audio processor (e.g., including audio processing circuitry) 170. A description of portions overlapping with the description in FIG. 2 will be omitted.

The processor 140 is a component that is configured to control a general operation of the display apparatus 100'.

For example, the processor 140 includes a random access memory (RAM) 141, a read only memory (ROM) 142, a graphic processing unit 143, a central processing unit (CPU) 144, first to n-th interfaces 145-1 to 145-n, and a bus 146. For example, the RAM 141, the ROM 142, the graphic processing unit 143, the main CPU 144, the first to n-th interfaces 145-1 to 145-n, and the like may be connected to each other through the bus 146.

The first to n-th interfaces 145-1 to 145-n are connected to the variety of components described above. One of the interfaces may also be a network interface connected to an external device through a network.

The main CPU 144 accesses the storage 150 and performs a booting using an operating system (O/S) stored in the storage 150. In addition, the main CPU 144 may perform various operations using a variety of programs, contents, data, and the like stored in the storage 150.

The RAM 141 stores a set of instructions for booting a system, and the like. When turn-on instruction is input to supply power, the main CPU 144 copies the O/S stored in the storage 150 in the RAM 141 according to the instructions stored in the ROM 142 and executes the O/S to boot the system. When the booting is completed, the main CPU 144 copies a variety of application programs stored in the storage 150 in the RAM 141 and executes the application programs copied in the RAM 141 to perform a variety of operations.

The graphic processing unit 143 generates a screen including various objects such as an icon, an image, a text, and the like, for example, a screen including the pointing object, using a calculator (not shown) and a renderer (not shown). The calculator (not shown) calculates attribute values such as coordinate values, shapes, sizes, colors, and the like in which the respective objects are to be displayed according to a layout of the screen based on the received control instruction. The renderer (not shown) generates the screen of various layouts including the objects based on the attribute values calculated by the calculator (not shown). The screen generated by the renderer (not shown) is displayed in a user interface region of the display 110.

Meanwhile, the operations of the processor 140 described above may be performed by the program stored in the storage 150.

The storage 150 stores various data such as an operating system (O/S) software module for driving the display apparatus 100 and a variety of multimedia contents.

For example, the storage 150 may store a base module processing signals transmitted from the respective hardware included in the display apparatus 100', a storage module managing a database (DB) or a registry, a graphic processing module for generating a screen of the layout, a security module, and the like. For example, the storage 150 may store programs such as a communication module, a signal processing module, a position calculating module, and the like which are required to implement the pointing according to an exemplary embodiment of the present disclosure.

The processor 140 may be configured to process the signal from the pointing apparatus 200 using the communication module, and may be configured to process the received signal using the signal processing module.

For example, the processor 140 may be configured to receive the signal corresponding to the oriented direction and the motion from the pointing apparatus 200, the processor 140 may be configured to convert the signal into X and Y coordinates of the display apparatus 100' using, for example, a signal processing algorithm. The processor 140 may be configured to determine a coordinate of the pointing object by mapping the converted X and Y coordinates to X and Y coordinates of the pointing object on an UI screen of the display apparatus 100', using a position determination module.

The image processor 160 is a component that performs various image processes such as decoding, scaling, noise filtering, frame rate converting, resolution converting, and the like for the contents.

The audio processor 170 is a component that performs the processing for audio data.

Although the above-mentioned example embodiment describes an example in which the signal processing based on the motion of the pointing apparatus 200 is performed by the display apparatus 100', this is merely one example. For example, the signal processing may also be performed by a signal processing algorithm stored in the pointing apparatus 200.

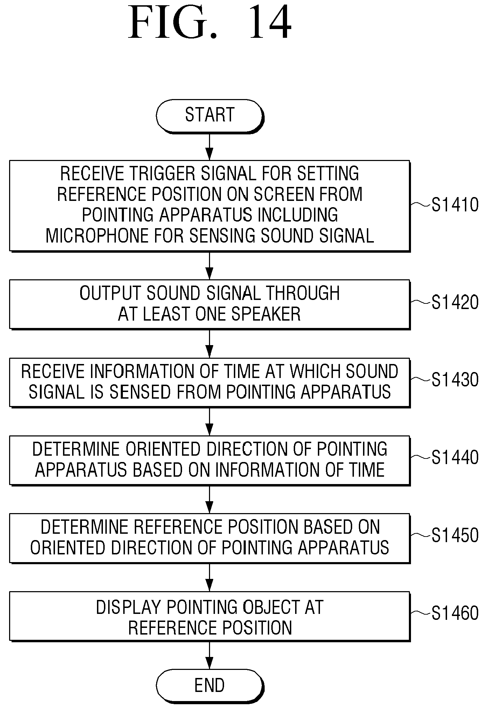

FIG. 14 is a flowchart illustrating an example control method of a display apparatus.

The trigger signal for setting the reference position on the screen is received from the pointing apparatus 200 including the microphone for sensing the sound signal (S1410).

The sound signal is output through at least one speaker (S1420). In this example, the display apparatus 100 may include the first speaker 120-1 outputting the first sound signal and the second speaker 120-2 spaced apart from the first speaker 120-1 by a preset distance and outputting the second sound signal different from the first sound signal.

Information of time at which the sound signal is sensed is received from the pointing apparatus 200 (S1430). In this example, information of time at which the first sound signal and the second sound signal are each sensed by the microphone may be received from the pointing apparatus 200.

The oriented direction of the pointing apparatus 200 may be determined based on the received information of time (S1440). For example, the oriented direction of the pointing apparatus 200 may be determined based on a difference of the sensed times of the first sound signal and the second sound signal calculated according to the information of time. In this example, the horizontal position corresponding to the position of the pointing apparatus 200 determined based on the difference of the sensed times may be determined. The vertical oriented direction of the pointing apparatus 200 may be determined based on the motion information of the pointing apparatus 200 sensed by the sensor included in the pointing apparatus 200.

The reference position may be determined depending on the determined oriented direction of the pointing apparatus 200 (S1450), and the pointing object is displayed at the determined reference position (S1460).

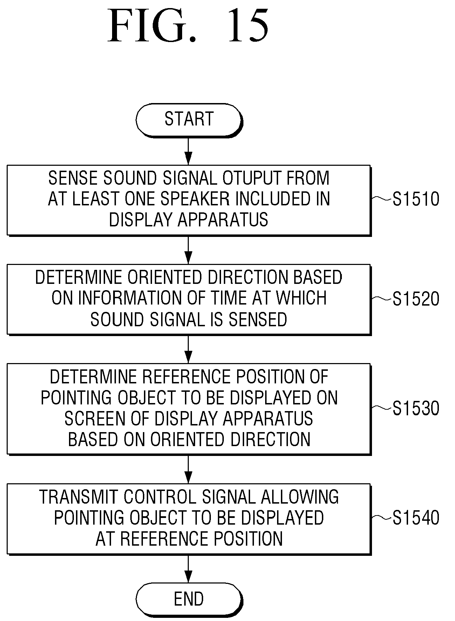

FIG. 15 is a flowchart illustrating an example control method of a pointing apparatus.

The sound signal output from at least one speaker included in the display apparatus 100 is sensed (S1510).

The oriented direction may be determined based on the information of time at which the sound signal is sensed (S1520). In this example, the display apparatus 100 includes the first speaker 120-1 outputting the first sound signal and the second speaker 120-2 spaced apart from the first speaker 120-1 by a preset distance and outputting the second sound signal different from the first sound signal. In this example, the difference of the sensed times of the first sound signal and the second sound signal may be determined depending on information of time at which the first sound signal and the second sound signal are sensed by the microphone 220, and the oriented direction may be determined based on the calculated difference of the sensed times. In this example, the pointing apparatus 200 may include at least one of an acceleration sensor and a gyro sensor. The horizontal position may be determined based on the difference of the sensed times, the horizontal oriented direction corresponding to the determined horizontal position is determined, and the vertical oriented direction may be determined based on the motion information sensed by at least one of the acceleration sensor and the gyro sensor.

The reference position of the pointing object to be displayed on the screen of the display apparatus 100 may be determined depending on the determined oriented direction (S1530), and the control signal allowing the pointing object to be displayed at the determined reference position is transmitted (S1540).

According to the various example embodiments of the present disclosure, a geomagnetic field sensor is not required in the absolute pointing scheme, and costs may be reduced and an initial start point of the cursor may be more conveniently set.

The control method of the display apparatus or the pointing apparatus according to the various example embodiments described above may be implemented in program so as to be stored in diverse recording media. For example, computer programs processed by a variety of processors to execute the diverse control methods described above may also be used in a state in which they are stored in the recording medium.

As an example, a non-transitory computer readable medium may be provided in which program is stored, the program performing an operation of receiving a trigger signal for setting a reference position on a screen, from a pointing apparatus including a microphone for sensing a sound signal, an operation of outputting the sound signal through at least one speaker, an operation of receiving information of time at which the sound signal is sensed from the pointing apparatus, an operation of determining an oriented direction of the pointing apparatus based on the information of time, an operation of determining the reference position depending on the oriented direction of the pointing apparatus, and an operation of displaying a pointing object at the reference position.

The non-transitory computer readable medium may, for example, refer to a machine-readable medium semi-permanently storing the data. For example, various applications or programs described above may be stored and provided in the non-transitory computer readable medium such as a compact disc (CD), a digital versatile disk (DVD), a hard disk, a Blu-ray disk, a universal serial bus (USB), a memory card, a read-only memory (ROM), or the like.

Although example embodiments of the present disclosure have been illustrated and described, it should be understood that the present disclosure is not limited to the disclosed example embodiments and may be variously changed without departing from the spirit and the scope of the present disclosure. Therefore, the present disclosure should be construed as including all the changes, equivalents, and substitutions included in the spirit and scope of the present disclosure.

**Claims**

1. A display apparatus comprising:

   at least one speaker configured to output a sound signal;
   a display configured to display a pointing object;
   communication circuitry configured to communicate with a pointing apparatus to control a movement state of the pointing object, the pointing apparatus comprising a microphone to sense the sound signal; and
   a processor configured to display the pointing object at a reference position determined based on an oriented direction of the pointing apparatus determined based on information of time including a time at which the pointing apparatus senses the sound signal after a trigger signal for setting the reference position of the pointing object on a screen of the display is received by the display apparatus from the pointing apparatus.

2. The display apparatus as claimed in claim 1, wherein the display apparatus includes a first speaker configured to output a first sound signal and a second speaker spaced apart from the first speaker by a preset distance and configured to output a second sound signal different from the first sound signal, and
   the processor is configured to receive, from the pointing apparatus, information of time at which the first sound signal and the second sound signal are each sensed by the microphone of the pointing apparatus, and to determine the oriented direction of the pointing apparatus based on a difference of the sensed times of the first sound signal and the second sound signal determined based on the information of time.

3. The display apparatus as claimed in claim 2, wherein the processor is configured to determine a horizontal position of the pointing apparatus based on the difference of the sensed times, to determine a horizontal oriented direction corresponding to the determined horizontal position of the pointing apparatus, and to determine a vertical oriented direction of the pointing apparatus based on motion information of the pointing apparatus sensed by a sensor included in the pointing apparatus.

4. The display apparatus as claimed in claim 2, wherein the information of time is a record file in which the first sound signal and the second sound signal are each recorded, or information of time at which the first sound signal and the second sound signal are each sensed.

5. The display apparatus as claimed in claim 1, wherein the pointing apparatus includes a first microphone and a second microphone, the first and second microphones being spaced apart from each other by a preset distance, and the processor is configured to receive, from the pointing apparatus, information of time at which the sound signal is sensed by the first microphone and the second microphone, respectively, and to determine the oriented direction of the pointing apparatus based on a difference of the sensed times of the first microphone and the second microphone determined based on the information of time.

6. The display apparatus as claimed in claim 5, wherein the processor is configured to determine a horizontal angle of the pointing apparatus based on the difference of the sensed times, to determine a horizontal oriented direction corresponding to the determined horizontal angle of the pointing apparatus, and to determine a vertical oriented direction of the pointing apparatus based on motion information of the pointing apparatus sensed by a sensor included in the pointing apparatus.

7. The display apparatus as claimed in claim 1, wherein the display apparatus includes a first speaker configured to output a first sound signal and a second speaker spaced apart from the first speaker by a preset distance and configured to output a second sound signal different from the first sound signal,
the pointing apparatus includes a first microphone and a second microphone spaced apart from each other by a preset distance, and
the processor is configured to receive, from the pointing apparatus, first information of time at which the first sound signal and the second sound signal are each sensed by any one of the first microphone and the second microphone, to receive second information of time at which any one of the first sound signal and the second sound signal is sensed by the first microphone and the second microphone, respectively, and to determine the oriented direction of the pointing apparatus based on a difference of the sensed times determined based on the first information of time and the second information of time.

8. The display apparatus as claimed in claim 7, wherein the processor is configured to determine a horizontal position and a horizontal angle of the pointing apparatus based on the difference of the sensed times, to determine a horizontal oriented direction corresponding to the determined horizontal position and horizontal angle of the pointing apparatus, and to determine a vertical oriented direction of the pointing apparatus based on motion information of the pointing apparatus sensed by a sensor included in the pointing apparatus.

9. The display apparatus as claimed in claim 1, wherein when a signal corresponding to a magnitude and a direction of a motion of the pointing apparatus is received from the pointing apparatus after the pointing object is displayed at the reference position, the processor is configured to move the pointing object to a position corresponding to the magnitude and the direction of the motion.

10. A pointing apparatus comprising:

communication circuitry configured to communicate with a display apparatus displaying a pointing object on a screen, the display apparatus comprising at least one speaker to output a sound signal;
a microphone configured to sense a sound signal from the display apparatus; and
a processor configured to determine an oriented direction based on information of time at which the sound signal from the display apparatus is sensed, to determine a reference position of the pointing object based on the oriented direction, and to transmit a control signal allowing the pointing object to be displayed at the reference position.

11. The pointing apparatus as claimed in claim 10, wherein the display apparatus includes a first speaker configured to output a first sound signal and a second speaker spaced apart from the first speaker by a preset distance and configured to output a second sound signal different from the first sound signal, and
the processor is configured to determine a difference of the sensed times of the first sound signal and the second sound signal abased on information of time at which the first sound signal and the second sound signal are each sensed by the microphone, and to determine an oriented direction based on the difference of the sensed times.

12. The pointing apparatus as claimed in claim 11, further comprising at least one of:

an acceleration sensor and a gyro sensor, and
the processor is configured to determine a horizontal position based on the difference of the sensed times, to determine a horizontal oriented direction corresponding to the determined horizontal position, and to determine a vertical oriented direction based on motion information sensed by at least one of the acceleration sensor and the gyro sensor.

13. A method of controlling a display apparatus, comprising:

receiving a trigger signal from a pointing apparatus for setting a reference position on a screen, the pointing apparatus including a microphone for sensing a sound signal;
outputting the sound signal through at least one speaker;
receiving, from the pointing apparatus, information of time at which the sound signal is sensed by the pointing apparatus;
determining an oriented direction of the pointing apparatus based on the information of time;
determining the reference position based on the oriented direction of the pointing apparatus; and
displaying a pointing object at the reference position.

14. The method as claimed in claim 13, wherein in the operation of outputting the sound signal, a first sound signal is output through a first speaker and a second sound signal different from the first sound signal is output through a second speaker, the second speaker being spaced apart from the first speaker by a preset distance,
in the operation of receiving the information of time, information of time at which the first sound signal and the second sound signal are each sensed by the microphone of the pointing apparatus is received from the pointing apparatus, and
in the operation of determining the oriented direction, the oriented direction of the pointing apparatus is determined based on a difference of the sensed times of the first sound signal and the second sound signal determined based on the information of time.

15. The method as claimed in claim 14, wherein the operation of determining the oriented direction includes:

determining a horizontal oriented direction corresponding to a horizontal position of the pointing apparatus determined based on the difference of the sensed times; and
determining a vertical oriented direction of the pointing apparatus based on motion information of the pointing apparatus sensed by a sensor included in the pointing apparatus.

# FIG. 1

# FIG. 2

100

# FIG. 3

200

# FIG. 4

# FIG. 5

# FIG. 6

# FIG. 7

# FIG. 8

# FIG. 9

# FIG. 10

# FIG. 11

EP 3 104 270 A1

# FIG. 12

100

200'

Pointing Start — S1210

INFORM START OF POINTING (IR, BT etc.)

S1220

DETERMINE VERTICAL ORIENTED ANGLE USING ACCELERATION /GYRO SENSOR

S1230

OUTPUT SOUND SIGNAL — S1240

SENSE SOUND SIGNAL

S1250

DETERMINE HORIZONTAL ORIENTED ANGLE — S1260

DETERMINE ORIENTED ANGLE — S1270

ORIENTED ANGLE (IR, BT etc.)

S1280

DISPLAY POINTING OBJECT BASED ON ORIENTED ANGLE ON SCREEN — S1290

# FIG. 13

100'

```
110 — DISPLAY

120 — SPEAKER
120-1 — FIRST SPEAKER
120-2 — SECOND SPEAKER

130 — COMMUNICATOR
```

140

146

141 RAM

142 ROM

143 GRAPHIC PROCESSING PROCESSING

144 MAIN CPU

145-1 FIRST INTERFACE

145-n N-TH INTERFACE

150 STORAGE

160 IMAGE PROCESSOR

170 AUDIO PROCESSOR

# FIG. 14

START

RECEIVE TRIGGER SIGNAL FOR SETTING
REFERENCE POSITION ON SCREEN FROM
POINTING APPARATUS INCLUDING
MICROPHONE FOR SENSING SOUND SIGNAL ～S1410

OUTPUT SOUND SIGNAL THROUGH
AT LEAST ONE SPEAKER ～S1420

RECEIVE INFORMATION OF TIME AT WHICH SOUND
SIGNAL IS SENSED FROM POINTING APPARATUS ～S1430

DETERMINE ORIENTED DIRECTION OF POINTING
APPARATUS BASED ON INFORMATION OF TIME ～S1440

DETERMINE REFERENCE POSITION BASED ON
ORIENTED DIRECTION OF POINTING APPARATUS ～S1450

DISPLAY POINTING OBJECT AT
REFERENCE POSITION ～S1460

END

# FIG. 15

```
            ( START )
                │
                ▼
┌──────────────────────────────────┐
│   SENSE SOUND SIGNAL OTUPUT FROM  │
│   AT LEAST ONE SPEAKER INCLUDED IN│ ~S1510
│        DISPLAY APPARATUS          │
└──────────────────────────────────┘
                │
                ▼
┌──────────────────────────────────┐
│  DETERMINE ORIENTED DIRECTION BASED│
│    ON INFORMATION OF TIME AT WHICH │ ~S1520
│       SOUND SIGNAL IS SENSED       │
└──────────────────────────────────┘
                │
                ▼
┌──────────────────────────────────┐
│    DETERMINE REFERENCE POSITION OF │
│  POINTING OBJECT TO BE DISPLAYED ON│
│     SCREEN OF DISPLAY APPARATUS    │ ~S1530
│      BASED ON ORIENTED DIRECTION   │
└──────────────────────────────────┘
                │
                ▼
┌──────────────────────────────────┐
│   TRANSMIT CONTROL SIGNAL ALLOWING │
│    POINTING OBJECT TO BE DISPLAYED │ ~S1540
│        AT REFERENCE POSITION       │
└──────────────────────────────────┘
                │
                ▼
             ( END )
```

Europäisches
Patentamt

European
Patent Office

Office européen
des brevets

# EUROPEAN SEARCH REPORT

Application Number

EP 16 16 0166

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/063206 A1 (KARAOGUZ JEYHAN [US] ET AL) 17 March 2011 (2011-03-17)<br>* figures 1,8,9 *<br>* paragraph [0043] - paragraph [0049] *<br>* paragraph [0090] *<br>* paragraph [0136] - paragraph [0146] *<br>----- | 1-15 | INV.<br>G06F3/16<br>G06F3/0346 |
| | | | TECHNICAL FIELDS SEARCHED (IPC) |
| | | | G06F |

The present search report has been drawn up for all claims

| Place of search | Date of completion of the search | Examiner |
|---|---|---|
| The Hague | 28 October 2016 | Alliot, Sylvain |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 16 0166

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2016

| Patent document cited in search report | Publication date | Patent family member(s) | Publication date |
|---|---|---|---|
| US 2011063206 A1 | 17-03-2011 | CN 102025933 A | 20-04-2011 |
| | | EP 2328347 A2 | 01-06-2011 |
| | | TW 201132122 A | 16-09-2011 |
| | | US 2011063206 A1 | 17-03-2011 |
| | | US 2011063509 A1 | 17-03-2011 |
| | | US 2011063511 A1 | 17-03-2011 |
| | | US 2011063521 A1 | 17-03-2011 |
| | | US 2011063522 A1 | 17-03-2011 |
| | | US 2011063523 A1 | 17-03-2011 |
| | | US 2011066929 A1 | 17-03-2011 |
| | | US 2011067047 A1 | 17-03-2011 |
| | | US 2011067051 A1 | 17-03-2011 |
| | | US 2011067052 A1 | 17-03-2011 |
| | | US 2011067054 A1 | 17-03-2011 |
| | | US 2011067055 A1 | 17-03-2011 |
| | | US 2011067056 A1 | 17-03-2011 |
| | | US 2011067057 A1 | 17-03-2011 |
| | | US 2011067060 A1 | 17-03-2011 |
| | | US 2011067061 A1 | 17-03-2011 |
| | | US 2011067062 A1 | 17-03-2011 |
| | | US 2011067063 A1 | 17-03-2011 |
| | | US 2011067064 A1 | 17-03-2011 |
| | | US 2011067065 A1 | 17-03-2011 |
| | | US 2011067069 A1 | 17-03-2011 |
| | | US 2011067071 A1 | 17-03-2011 |
| | | US 2014366062 A1 | 11-12-2014 |
| | | US 2014380381 A1 | 25-12-2014 |
| | | US 2014380401 A1 | 25-12-2014 |
| | | US 2015007222 A1 | 01-01-2015 |
| | | US 2015012939 A1 | 08-01-2015 |
| | | US 2015106857 A1 | 16-04-2015 |
| | | US 2015135217 A1 | 14-05-2015 |
| | | US 2015172769 A1 | 18-06-2015 |
| | | US 2015296263 A1 | 15-10-2015 |
| | | US 2015304721 A1 | 22-10-2015 |
| | | US 2015326931 A1 | 12-11-2015 |
| | | US 2016007090 A1 | 07-01-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020150081476